# EUROPÄISCHE PATENTANMELDUNG

(11) **EP 0 548 392 A1**
(43) Veröffentlichungstag der Anmeldung: **30.06.1993**
(21) Anmeldenummer: 91122082.0
(22) Anmeldetag: 21.12.1991
(51) Int. Cl.: F16C 41/02, F16C 32/06

(54) **Hydrostatisches Axialgleitlager**

(71) Anmelder: JAHNEL-KESTERMANN GETRIEBEWERKE BOCHUM GmbH, D-44789 Bochum (DE)
(72) Erfinder: Raphael, Ernst, W-4630 Bochum (DE)
(74) Vertreter: Bockermann, Rolf, Dipl.-Ing.

(57) **Zusammenfassung**

Das Axialgleitlager (1) umfaßt mehrere Lagerbuchsen (2-4) und Stützbuchsen (5-7) mit axialen Distanzstutzen (8-10, 14-16) und Radialbunden (11-13, 18-20). In Belastungsrichtung (F) sind jeweils hintereinander angeordnete und mit Öl beaufschlagbare Druckflächenpaare (25-27) vorgesehen, die jeweils zwei sich frontal gegenüberliegende Druckflächen (23, 24) aufweisen. Die Dicke der Radialbunde (11-13) der Lagerbuchsen (2-4) ist kleiner als die Dicke der Radialbunde (18-20) der Stützbuchsen (5-7) bemessen. Die Wanddicke der Distanzstutzen (8-10) der Lagerbuchsen (2-4) nimmt von Lagerbuchse (2) zu Lagerbuchse (4) zu. Die Wanddicke der Distanzstutzen (14-16) der Stützbuchsen (5-7) nimmt in derselben Richtung von Stützbuchse (5) zu Stützbuchse (7) ab. Ölführungsbohrungen (34) in den Radialbunden (18-20) der Stützbuchsen (5-7) sichern ein übereinstimmendes Temperaturniveau der Lagerbuchsen (2-4) und der Stützbuchsen (5-7).

## Beschreibung

Die Erfindung betrifft ein hydrostatisches Axialgleitlager gemäß den Merkmalen im Oberbegriff des Patentanspruchs 1.

Hydrostatische Axialgleitlager weisen eine hohe Tragfähigkeit bei nahezu verschleißfreiem Lauf auf. Außerdem gestatten sie im Gegensatz zu hydrodynamischen Lagern einen Betrieb mit geringen Drehzahlen bei vernachlässigbarer Reibung. Weitere wesentliche Merkmale sind hohe Steifigkeiten und ein geringes Spiel.

Obwohl hydrostatische Axialgleitlager mit Drucköl versorgt werden müssen, gibt man ihnen dennoch insbesondere in den Fällen den Vorzug gegenüber Wälzlagern, wenn eine hohe Leistungsdichte bei geringem Verschleiß gefordert wird. Dies ist z. B. bei Lagerungen in Werkzeugmaschinen der Fall, jedoch auch im Schwermaschinenbau bei schwer zugänglichen und daher nur mit einem kostenintensiven Aufwand auswechselbaren Lagerungen. Demzufolge werden hydrostatische Axialgleitlager häufig in die Antriebe von Doppelschneckenpressen integriert. Dort dienen sie vor allem zur Abstützung der axialen Drücke aus dem Extrusionsprozeß.

Die Tragfähigkeit eines hydrostatischen Axialgleitlagers hängt von der Größe der Druckflächen sowie von dem Druck im Ölpolster zwischen den Druckflächen ab. Unter dieser Voraussetzung bieten sich im Prinzip zwei Möglichkeiten an, mit denen die Tragfähigkeit von Axialgleitlagern gesteigert werden kann. Eine Möglichkeit besteht in der Erhöhung des Öldrucks im System und die andere Möglichkeit wird in der Vergrößerung der Druckflächen gesehen. Im Hinblick auf den Sachverhalt, daß die Erhöhung des Öldrucks ihre Grenze in der Technologie der zur Verfügung stehenden Hydraulikaggregate findet, steht dann nur noch die Vergrößerung der Druckflächen zur Diskussion. Nun können aber auch die Druckflächen unter den jeweiligen praktischen Gegebenheiten nicht beliebig vergrößert werden, wobei insbesondere bei parallel angeordneten Wellen die radiale Ausdehnung der Axialgleitlager zwangsweise räumlichen Einschränkungen unterworfen ist.

Von daher gesehen bietet es sich also an, in der axialen Belastungsrichtung der Axialgleitlager mehrere Druckflächenpaare im Abstand hintereinander anzuordnen. Voraussetzung hierbei ist allerdings, daß es gelingt, die Gesamtlast proportional zu den Größen der einzelnen Druckflächen zu verteilen, um Druckunterschiede in den diversen Ölpolstern zu vermeiden. Dazu ist es erforderlich, die Dicke der Ölpolster, d. h. den Spalt zwischen den einander gegenüberliegenden Druckflächen eines Druckflächenpaars, bezüglich sämtlicher Druckflächenpaare eines Axialgleitlagers übereinstimmend zu gestalten. Dieser Forderung kann derzeit mit den zur Verfügung stehenden Fertigungstechniken ohne wesentliche Probleme bei der Herstellung eines Axialgleitlagers Rechnung getragen werden. Schwierigkeiten ergeben sich indessen durch betriebsbedingte unterschiedliche thermische und elastische Verformungen in den einzelnen Lagerstufen mit der Folge, daß dann auch die axialen Abstände zwischen den Druckflächen eines Druckflächenpaars in radialer Richtung variieren.

Im Rahmen der DE-OS 21 13 250 ist ein Vorschlag bekanntgeworden, welcher der voraufgehend geschilderten Problematik auf fertigungstechnischem Wege durch eine entsprechende Tolerierung der Spaltweiten der in Belastungsrichtung eines Axialgleitlagers hintereinander angeordneten Druckflächenpaare beikommen will. Dazu sieht dieser Vorschlag eine Differenzierung der Stützweiten der Gleitflächen der auf einer Welle hintereinander angeordneten Lagerbuchsen gegenüber den konstanten Stützweiten der Gleitflächen der widerlagerseitigen Stützbuchsen vor, so daß Lagerspalte mit differenzierter Größe vorhanden sind.

Diesem Vorschlag haften aber diverse Nachteile an. Ein Nachteil ist, daß ein Ausgleich zwischen der radial inneren Spaltweite und der radial äußeren Spaltweite jedes Druckflächenpaars nicht erreicht werden kann. Ein weiterer Nachteil besteht darin, daß unterschiedliche Spaltweiten im Teillastbereich den Einsatz verlustbehafteter Drosseln in der Ölzuführung zu den einzelnen Druckflächenpaaren (Ölpolstern) erforderlich machen, damit das Abströmen des Öls über den hinsichtlich der Weite größten Spalt vermieden wird. Darüberhinaus ist die vorschlagsgemäße Differenzierung der Stützweiten mit einer derart engen Tolerierung der axialen Länge einer durch eine Lagerbuchse und eine Stützbuchse gebildeten Druckstufe im Mikrometerbereich notwendig, daß diese mit einem wirtschaftlich noch einigermaßen vertretbaren Aufwand nicht zu bewerkstelligen ist. Darüberhinaus vernachlässigt der bekannte Vorschlag voneinander abweichende Temperaturen der Lagerbuchsen und der Stützbuchsen, wodurch naturgemäß Verformungsdifferenzen nicht vermieden werden können. Schließlich können Verformungsdifferenzen auch durch den Einsatz von Werkstoffen unterschiedlicher Wärmeausdehnung entstehen.

Ausgehend von dem im Oberbegriff des Patentanspruchs 1 beschriebenen hydrostatischen Axialgleitlager liegt der Erfindung das Problem zugrunde, dieses so zu verbessern, daß in jedem betrieblichen Lastzustand die Spaltweite aller Druckflächenpaare über ihre gesamte radiale Ausdehnung identisch groß ist.

Die Lösung dieses Problems besteht nach der Erfindung in den im kennzeichnenden Teil des Patentanspruchs 1 aufgeführten Merkmalen.

Danach ist es nunmehr möglich, ein hydrostatisches Axialgleitlager mit mindestens zwei im Abstand hintereinander angeordneten und mit Öl beaufschlagbaren Druckflächenpaaren so auszubilden, daß in jedem Lastzustand des Axialgleitlagers alle durch die jeweils einander gegenüberliegenden Druckflächen der Druckflächenpaare gebildeten Dichtspalte denselben Öldurchfluß aufweisen. Aufgrund des Sachverhalts, daß die Dicke der Radialbunde der Lagerbuchsen kleiner als die Dicke der Radialbunde der Stützbuchsen bemessen ist, daß die Wanddicke der Distanzstutzen der Lagerbuchsen von Lagerbuchse zu Lagerbuchse zunimmt und daß die Wanddicke der Distanzstutzen der Stützbuchsen in derselben Richtung von Stützbuchse zu Stützbuchse abnimmt, können die die Dichtspalte bestimmenden Bauteile des Axialgleitlagers so gestaltet werden, daß deren Steifigkeiten die nicht zu vermeidenden elastischen Verformungen so beeinflussen, daß sämtliche inneren und äußeren Dichtspalte in allen Betriebszuständen stets eine identische Spaltweite besitzen. Dies führt zu einem im wesentlichen identischen Öldurchfluß in allen Dichtspalten. Damit ist der besondere Vorteil verbunden, daß alle Druckflächenpaare denselben Beanspruchungen ausgesetzt sind, ohne daß Maßnahmen getroffen werden müssen, welche sicherstellen, daß alle Druckflächenpaare ihre Funktion aufrechterhalten. Dabei läßt es die Erfindung zu, daß alle Druckflächenpaare demselben Druck ausgesetzt sind, so daß die Dichtspalte quasi als ein kommunizierendes hydraulisches System betrachtet werden können. Das Ergebnis dieser erfindungsgemäßen Maßnahmen ist, daß die peripheren Aggregate zur Bereitstellung des Drucköls vom Umfang her kleiner und einfacher gehalten werden können. Auch brauchen im Vergleich zum Stand der Technik wesentlich geringere Öldrücke bereitgestellt zu werden.

Die im Patentanspruch 2 enthaltene Längenbemessung erlaubt es, daß die jeweils paarweise einander zugeordneten Lagerbuchsen und Stützbuchsen gemeinsam bearbeitet werden können. Folglich kann eine identische Länge auf den bekannten Bearbeitungsmaschinen sichergestellt werden. Dabei ist die axiale Länge jeder einzelnen Paarung nebensächlich. Sie kann ohne weiteres von der Länge einer Nachbarpaarung abweichen. Wesentlich ist nur, daß jede Paarung hinsichtlich der Länge ihrer Lagerbuchse und ihrer Stützbuchse übereinstimmt.

Mit den Merkmalen des Patentanspruchs 3 ist beabsichtigt, die Außendurchmesser der Distanzstutzen gleich gestalten zu können, um die biegeelastischen Eigenschaften der Radialbunde der Lagerbuchsen weitgehend einander anzugleichen. Durch die unterschiedliche Bemessung der Innendurchmesser der Distanzstutzen zu den Innendurchmessern der Wellenbohrungen kann somit die Biegeelastizität jedes Radialbunds der Lagerbuchsen in Abhängigkeit von der Differenz ihrer Außendurchmesser zu den Außendurchmessern der Distanzstutzen gezielt eingestellt werden.

Der vorstehend zu den Merkmalen des Patentanspruchs 3 geschilderte Sachverhalt trifft in analoger Anwendung auch auf die Merkmale des Patentanspruchs 4 zu. Das heißt, daß auch dort die Biegeelastizität der Radialbunde exakt bemessen werden kann.

Die Rundung der Übergänge gemäß Patentanspruch 5 vermeidet lokale Spannungsspitzen und führt damit zu einer längeren Lebensdauer der entsprechenden Bauteile.

Um die funktionsbedingten thermischen Verformungen zwischen den Lagerbuchsen und den Stützbuchsen zu eliminieren und um sicherzustellen, daß die dadurch evtl. hervorgerufenen Längendifferenzen zwischen den paarweise einander zugeordneten Lagerbuchsen und Stützbuchsen aufgehoben werden, wird gemäß Patentanspruch 6 mit der Anordnung von Ölführungsbohrungen in den Radialbunden der Stützbuchsen dafür Sorge getragen, daß sich das in den Dichtspalten durch Entspannung erwärmte Öl so gleichmäßig über alle Radialbunde der Stützbuchsen verteilen kann, daß auf diese Weise die innenliegenden Lagerbuchsen und die außenliegenden Stützbuchsen im wesentlichen auf ein und demselben Temperaturniveau gehalten werden.

Mit der konischen Gestaltung der Radialbunde der Lagerbuchsen nach Patentanspruch 7 wird der Vorteil erreicht, daß das Öl einen ausreichend großen Durchflußquerschnitt vorfindet. Damit wird jeglicher Ölstau auf der Niederdruckseite vermieden, ohne jedoch Einbußen hinsichtlich der Steifigkeit der Lagerbuchsen hinzunehmen.

Die Erfindung ist nachfolgend anhand eines in den Zeichnungen veranschaulichten Ausführungsbeispiels näher erläutert. Es zeigen:
- Figur 1: einen vertikalen Längsschnitt durch ein Axialgleitlager und
- Figur 2: ein elastisches Modell des Axialgleitlagers der Figur 1.

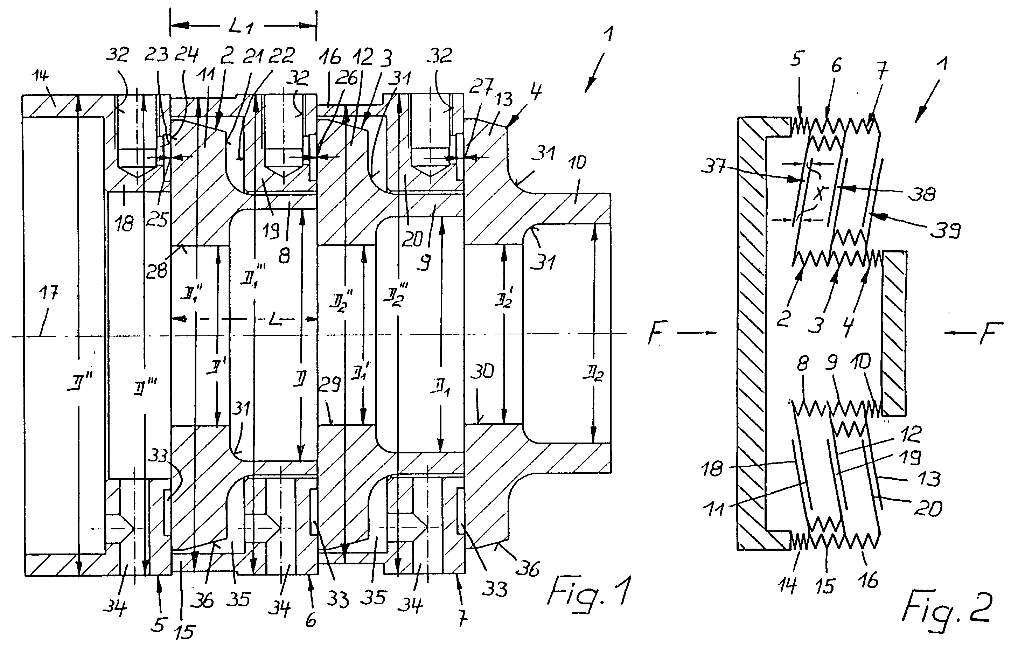

Mit 1 ist in den Figuren 1 und 2 ein hydrostatisches Axialgleitlager bezeichnet, das beispielsweise bei einem Antrieb einer Doppelschneckenpresse zur Abstützung der axialen Drücke F aus dem Extrusionsprozeß Anwendung finden kann.

Das Axialgleitlager 1 besitzt insgesamt drei wellenseitige Lagerbuchsen 2, 3, 4 sowie drei widerlagerseitige Stützbuchsen 5, 6, 7.

Die Lagerbuchsen 2-4 besitzen in dieselbe Richtung weisende axiale Distanzstutzen 8, 9, 10 sowie rechtwinklig zu den Distanzstutzen 8-10 sich nach außen erstreckende Radialbunde 11, 12, 13.

Auch die Stützbuchsen 5-7 besitzen axiale Distanzstutzen 14, 15, 16 sowie dazu sich rechtwinklig erstreckende, jedoch zur Wellenachse 17 weisende Radialbunde 18, 19, 20. Die Distanzstutzen 14-16 der Stützbuchsen 5-7 weisen im Vergleich zu den Distanzstutzen 8-10 der Lagerbuchsen 2-4 in die entgegengesetzte Richtung.

Der Figur 1 ist zu entnehmen, daß die Dicke der Radialbunde 11-13 der Lagerbuchsen 2-4 geringer als die Dicke der Radialbunde 18-20 der Stützbuchsen 5-7 bemessen ist. Ferner ist zu sehen, daß die Wanddicke der Distanzstutzen 8-10 der Lagerbuchsen 2-4 von der Lagerbuchse 2 zur Lagerbuchse 4 hin zunimmt und daß die Wanddicke der Distanzstutzen 14-16 der Stützbuchsen 5-7 in derselben Richtung von der Stützbuchse 5 zur Stützbuchse 7 hin abnimmt. Dabei nimmt die Dicke der Radialbunde 18-20 von der Stützbuchse 5 bis zur Stützbuchse 7 zu, während in derselben Richtung die Dicke der Radialbunde 11-13 von der Lagerbuchse 2 bis zur Lagerbuchse 4 abnimmt.

Jeweils eine Lagerbuchse, z.B. 2, und eine Stützbuchse, z.B. 6, sind paarweise ineinandergeschachtelt einander zugeordnet. Dabei ist die axiale Länge L der hinsichtlich der Kreisringflächen 21, 22 ihrer Radialbunde 11, 19 einander frontal gegenüberliegenden Lagerbuchse 2 und L1 der Stützbuchse 6 identisch bemessen. Außerdem ist zu sehen, daß von den jeweils sich frontal gegenüberliegenden Druckflächen 23 der Lagerbuchsen 2-4 und 24 der Stützbuchsen 14-16 mit Öl beaufschlagbare Druckflächenpaare 25, 26, 27 gebildet werden.

Die Distanzstutzen 8 und 9 der Lagerbuchsen 2 und 3 stützen sich an den Stirnflächen 23 der jeweils benachbarten Radialbunde 12, 13 ab, während die Distanzstutzen 15, 16 der Stützbuchsen 6, 7 sich an den Stirnflächen 24 der jeweils benachbarten Radialbunde 18, 19 abstützen.

Der Innendurchmesser D, D1, D2 der Distanzstutzen 8-10 der Lagerbuchsen 2-4 ist größer als der Innendurchmesser D', D1', D2' der jeweiligen Wellenbohrungen 28-30 gestaltet. Entsprechend ist dann auch der Außendurchmesser D'', D1'', D2'' der Distanzstutzen 14-16 der Stützbuchsen 5-7 kleiner als der Außendurchmesser D''', D1''', D2''' der jeweiligen Radialbunde 18-20 ausgebildet.

Die Übergänge 31 von den Distanzstutzen 8-10 der Lagerbuchsen 2-4 auf die Radialbunde 11-13 sind gerundet, um Spannungsspitzen zu vermeiden.

Während aus radialer Richtung in die Radialbunde 18-20 der Stützbuchsen 5-7 Gewindebohrungen 32 eingearbeitet sind, über die Drucköl von einem nicht näher dargestellten Druckölversorgungsaggregat in die kreisringförmigen Aussparungen 33 in den Druckflächen 24 der Stützbuchsen 5-7 eingeleitet wird, sind andererseits über den Umfang der Radialbunde 18-20 der Stützbuchsen 5-7 verteilt mehrere, beim Ausführungsbeispiel T-förmige Ölführungsbohrungen 34 in den Radialbunden 18-20 vorgesehen, die mit den von den Distanzstutzen 14-17 der Stützbuchsen 5-7 und deren Radialbunden 18-20 sowie den Radialbunden 11-13 der Lagerbuchsen 2-4 begrenzten Bereichen 35 in Öl überleitender Verbindung stehen.

Schließlich läßt die Figur 1 noch erkennen, daß die umfangsseitigen Oberflächen 36 der Radialbunde 11-13 der Lagerbuchsen 2-4 in Richtung auf ihre Distanzstutzen 8-10 mindestens zum Teil konisch abfallend ausgebildet sind.

Bei gemeinsamer Betrachtung der Figuren 1 und 2 ist erkennbar, daß das dargestellte hydrostatische Axialgleitlager 1 so ausgebildet ist, daß in jedem Lastzustand alle Dichtspalte 37-39 zwischen den Lagerbuchsen 2-4 und den Stützbuchsen 5-7 den gleichen Öldurchfluß aufweisen. Durch die Ölführungsbohrungen 34 ist außerdem dafür Sorge getragen, daß das Temperaturniveau der Lagerbuchsen 2-4 und der Stützbuchsen 5-7 gleich ist. Verformungsdifferenzen der Lagerbuchsen 2-4 relativ zu den Stützbuchsen 5-7 werden durch die Ausbildung der Distanzstutzen 8-10 der Lagerbuchsen 2-4, der Distanzstutzen 14-16 der Stützbuchsen 5-7 sowie der Radialbunde 11-13 der Lagerbuchsen 2-4 und 14-16 der Stützbuchsen 5-7 ausgeglichen, und zwar sowohl hinsichtlich der Druckverformung in den Distanzstutzen 8-10 und 14-16 als auch hinsichtlich der Biegeverformung in den Radialbunden 11-13 und 18-20, um hierbei die Spalthöhe X am Außen- und Innenrand eines jeden Druckflächenpaars 25-27 auszugleichen. Siehe diesbezüglich insbesondere die Figur 2. Daher sind die Radialbunde 18-20 der Stützbuchsen 5-7 dicker als die Radialbunde 11-13 der Lagerbuchsen 2-4 bemessen, da die versteifende Wirkung eines Bundes bei größerem Durchmesser abnimmt. Figur 2 verdeutlicht in diesem Zusammenhang, daß die vorstehend erwähnte Maßnahme unabhängig von der Belastung zu gleichen Spalthöhen X in jedem Dichtspalt 37-39 führt.

### Bezugszeichenaufstellung

- 1: - Axialgleitlager
- 2: - Lagerbuchse
- 3: - Lagerbuchse
- 4: - Lagerbuchse
- 5: - Stützbuchse
- 6: - Stützbuchse
- 7: - Stützbuchse
- 8: - Distanzstutzen v. 2
- 9: - Distanzstutzen v. 3
- 10: - Distanzstutzen v. 4
- 11: - Radialbund v. 2
- 12: - Radialbund v. 3
- 13: - Radialbund v. 4
- 14: - Distanzstutzen v. 5
- 15: - Distanzstutzen v. 6
- 16: - Distanzstutzen v. 7
- 17: - Wellenachse
- 18: - Radialbund v. 5
- 19: - Radialbund v. 6
- 20: - Radialbund v. 7
- 21: - Kreisringfläche v. 11, 12, 13
- 22: - Kreisringfläche v. 18, 19, 20
- 23: - Druckfläche v. 11, 12, 13
- 24: - Druckfläche v. 18, 19, 20
- 25: - Druckflächenpaar v. 2, 5
- 26: - Druckflächenpaar v. 3, 6
- 27: - Druckflächenpaar v. 4, 7
- 28: - Wellenbohrung v. 2
- 29: - Wellenbohrung v. 3
- 30: - Wellenbohrung v. 4
- 31: - Übergänge v. 8-10 auf 11-13
- 32: - Gewindebohrungen in 18-20
- 33: - Aussparungen in 18-20
- 34: - Ölführungsbohrungen
- 35: - Bereiche zw. 21, 22
- 36: - Oberflächen v. 11-13
- 37: - Dichtspalt
- 38: - Dichtspalt
- 39: - Dichtspalt

- D: - Innendurchmesser v. 8
- D1: - Innendurchmesser v. 9
- D2: - Innendurchmesser v. 10
- D': - Innendurchmesser v. 28
- D1': - Innendurchmesser v. 29
- D2': - Innendurchmesser v. 30
- D'': - Außendurchmesser v. 14
- D1'': - Außendurchmesser v. 15
- D2'': - Außendurchmesser v. 16
- D''': - Außendurchmesser v. 18
- D1''': - Außendurchmesser v. 19
- D2''': - Außendurchmesser v. 20
- F: - axialer Druck
- L: - axiale Länge v. 2
- L1: - axiale Länge v. 6
- X: - Spalthöhe

## Patentansprüche

1. Hydrostatisches Axialgleitlager, das in Belastungsrichtung mindestens zwei im Abstand hintereinander angeordnete und mit Öl beaufschlagbare Druckflächenpaare (25-27) umfaßt, die jeweils zwei sich frontal gegenüberliegende Druckflächen (23, 24) aufweisen, von denen eine Druckfläche (23) an der Stirnseite eines auswärts gerichteten Radialbunds (11-13) einer wellenseitigen Lagerbuchse (2-4) vorgesehen ist, während die andere Druckfläche (24) an der Stirnseite eines einwärts gerichteten Radialbunds (18-20) einer widerlagerseitigen Stützbuchse (5-7) liegt, wobei die Lagerbuchsen (2-4) mit in die eine Richtung sich erstreckenden axialen Distanzstutzen (8-10) und die Stützbuchsen (5-7) mit in die Gegenrichtung weisenden axialen Distanzstutzen (14-16) versehen sind, **dadurch gekennzeichnet,** daß die Dicke der Radialbunde (11-13) der Lagerbuchsen (2-4) kleiner als die Dicke der Radialbunde (18-20) der Stützbuchsen (5-7) bemessen ist, daß die Wanddicke der Distanzstutzen (8-10) der Lagerbuchsen (2-4) von Lagerbuchse (2) zu Lagerbuchse (4) zunimmt, und daß die Wanddicke der Distanzstutzen (14-16) der Stützbuchsen (5-7) in derselben Richtung von Stützbuchse (5) zu Stützbuchse (7) abnimmt.

2. Axialgleitlager nach Anspruch 1, **dadurch gekennzeichnet,** daß die axiale Länge (L, L1) der hinsichtlich der Kreisringflächen (21, 22) ihrer Radialbunde (11-19; 12-20) einander frontal gegenüberliegenden Lagerbuchsen (2-4) und Stützbuchsen (5-7) identisch bemessen ist.

3. Axialgleitlager nach Anspruch 1 oder 2, **dadurch gekennzeichnet,** daß der Innendurchmesser (D, D1, D2) der Distanzstutzen (8-10) der Lagerbuchsen (2-4) größer als der Innendurchmesser (D', D1', D2') der jeweiligen Wellenbohrungen (28-30) gestaltet ist.

4. Axialgleitlager nach einem der Ansprüche 1 bis 3, **dadurch gekennzeichnet,** daß der Außendurchmesser (D'', D1'', D2'') der Distanzstutzen (14-16) der Stützbuchsen (5-7) kleiner als der Außendurchmesser (D''', D1''', D2''') der jeweiligen Radialbunde (18-20) gestaltet ist.

5. Axialgleitlager nach einem der Ansprüche 1 bis 4, **dadurch gekennzeichnet,** daß die Übergänge (31) von den Distanzstutzen (8-10) der Lagerbuchsen (2-4) auf die Radialbunde (11-13) gerundet sind.

6. Axialgleitlager nach einem der Ansprüche 1 bis 5, **dadurch gekennzeichnet,** daß in den Radialbunden (18-20) der Stützbuchsen (5-7) Ölführungsbohrungen (34) vorgesehen sind, die mit den von den Distanzstutzen (14-16) der Stützbuchsen (5-7) und deren Radialbunde (18-20) sowie den Radialbunden (11-13) der Lagerbuchsen (2-4) begrenzten Bereichen (35) in Öl überleitender Verbindung stehen.

7. Axialgleitlager nach einem der Ansprüche 1 bis 6, **dadurch gekennzeichnet,** daß die umfangsseitigen Oberflächen (36) der Radialbunde (11-13) der Lagerbuchsen (2-4) in Richtung auf ihre Distanzstutzen (8-10) mindestens zum Teil konisch abfallend ausgebildet sind.
